# EUROPÄISCHE PATENTSCHRIFT

(11) **EP 2 467 693 B1**
(45) Veröffentlichungstag und Bekanntmachung des Hinweises auf die Patenterteilung: **05.06.2013**
(21) Anmeldenummer: 10740149.9
(22) Anmeldetag: 03.07.2010
(51) Int. Cl.: G01M 17/007

(54) **VERFAHREN ZUM BETRIEB EINER CRASHSIMULATIONSEINRICHTUNG, ZUSATZVORRICHTUNG FÜR EINE CRASHSIMULATIONSEINRICHTUNG UND CRASHSIMULATIONSEINRICHTUNG MIT EINER SOLCHEN ZUSATZVORRICHTUNG**
METHOD FOR OPERATING A CRASH SIMULATION DEVICE, AUXILIARY DEVICE FOR A CRASH SIMULATION DEVICE, AND CRASH SIMULATION DEVICE HAVING SUCH AN AUXILIARY DEVICE
PROCÉDÉ PERMETTANT DE FAIRE FONCTIONNER UN DISPOSITIF DE SIMULATION DE COLLISION, ÉQUIPEMENT ADDITIONNEL DESTINÉ À UN DISPOSITIF DE SIMULATION DE COLLISION, ET DISPOSITIF DE SIMULATION DE COLLISION COMPORTANT LEDIT ÉQUIPEMENT ADDITIONNEL

(30) Priorität: 21.08.2009 DE 102009038455
(43) Veröffentlichungstag der Anmeldung: 27.06.2012
(73) Patentinhaber: GM Global Technology Operations LLC, Detroit, MI 48265-3000 (US)
(72) Erfinder: WALLICH, Olaf, Manfred, 64560 Riedstadt (DE); ELSENHEIMER, Willi, 65439 Flörsheim (DE)
(74) Vertreter: Strauss, Peter
(86) Internationale Anmeldenummer: PCT/EP2010/004031
(87) Internationale Veröffentlichungsnummer: WO 2011/020524

(56) Entgegenhaltungen:
- DE-A1-102005 042 260
- US-A- 5 483 845
- US-A1- 2007 251 295

## Beschreibung

Die vorliegende Erfindung betrifft ein Verfahren zum Betrieb einer Crashsimulationseinrichtung für Kraftfahrzeuge. Darüber hinaus betrifft die vorliegende Erfindung eine Zusatzvorrichtung für einen beschleunigbaren Schlitten einer Crashsimulationseinrichtung sowie eine Crashsimulationseinrichtung mit einer solchen Zusatzvorrichtung.

Aus dem Stand der Technik sind Crashsimulationseinrichtungen für Kraftfahrzeuge bekannt, die einen beschleunigbaren Schlitten, an dem ein Fahrzeug oder Fahrzeugteil und ein beweglicher Dummy angeordnet werden kann, und eine Beschleunigungs- bzw. Antriebsvorrichtung zum Antreiben bzw. Beschleunigen des Schlittens aufweisen. Das Dokument DE 10 2005 042 260 offenbart eine solche Einrichtung.

Um vor dem Realversuch mit dem an dem Schlitten befestigten Fahrzeug oder Fahrzeugteil und dem an dem Schlitten angeordneten beweglichen Dummy die Crashsimulationseinrichtung derart einzustellen, dass der Beschleunigungsverlauf des Schlittens den Beschleunigungsverlauf bei einem realen Zusammenprall möglichst exakt nachvollzieht, werden vor dem zuvor erwähnten Realversuch Vorversuche durchgeführt. Im Rahmen der Vorversuche wird auf das Anordnen des Fahrzeugs bzw. Fahrzeugteils und des Dummys an dem beschleunigbaren Schlitten verzichtet, um diese kostspieligen und störanfälligen Komponenten zu schonen. So wird an dem beschleunigbaren Schlitten lediglich eine Zusatzmasse befestigt, deren Gewicht im Wesentlichen dem Gesamtgewicht des später zu verwendenden Fahrzeugs oder Fahrzeugteils in Kombination mit dem Dummy entspricht. Die Zusatzmasse ist dabei unbeweglich an dem Schlitten der Crashsimulationseinrichtung befestigt. Anschließend wird der zuvor erwähnte Vorversuch durchgeführt, in dem der Schlitten mit der daran befestigten Zusatzmasse durch die Beschleunigungs- bzw. Antriebsvorrichtung der Crashsimulationseinrichtung beschleunigt wird. Im Rahmen des Vorversuchs wird der Beschleunigungsverlauf des Schlittens erfasst, um den erfassten Beschleunigungsverlauf mit einem Sollbeschleunigungsverlauf des Schlittens zu vergleichen, wobei der Sollbeschleunigungsverlauf im Wesentlichen einen Beschleunigungsverlauf während eines realen Zusammenpralls oder Aufpralls des Kraftfahrzeugs entspricht. Sollte der erfasste Beschleunigungsverlauf des Schlittens von dem Sollbeschleunigungsverlauf abweichen, so werden zunächst die Einstellungen der für den Beschleunigungsverlauf des Schlittens maßgeblichen Komponenten der Crashsimulationseinrichtung verändert, um anschließend einen weiteren Vorversuch durchzuführen. So könnte im Rahmen der Einstellung der für den Beschleunigungsverlauf des Schlittens maßgeblichen Komponenten der Crashsimulationseinrichtung beispielsweise der von der Beschleunigungseinrichtung auf den Schlitten ausgeübte Impuls verändert werden. Ebenso ist es denkbar, eine gegebenenfalls an dem Schlitten vorgesehene Bremseinrichtung bzw. deren Einstellungen zu verändern, um den zu erfassenden Beschleunigungsverlauf an den Sollbeschleunigungsverlauf anzunähern. Sollte der im Rahmen des zweiten Vorversuches erfasste Beschleunigungsverlauf wiederum von dem Sollbeschleunigungsverlauf abweichen, so werden die Einstellungen der Crashsimulationseinrichtung erneut geändert, um anschließend wiederum einen Vorversuch durchzuführen usw.

Sollte der Vergleich des zuletzt erfassten Beschleunigungsverlaufes mit dem Sollbeschleunigungsverlauf übereinstimmen, so sind die Einstellungen der für den Beschleunigungsverlauf des Schlittens maßgeblichen Komponenten der Crashsimulationseinrichtung gefunden, die zu einem möglichst realitätsnahen Beschleunigungsverlauf des Schlittens führen. Somit können die Vorversuche abgebrochen werden, um anschließend einen Realversuch durchzuführen. Zu diesem Zweck wird zunächst die Zusatzmasse aus den Vorversuchen von dem Schlitten entfernt, um anschließend ein Fahrzeug oder Fahrzeugteil unbeweglich an dem Schlitten der Crashsimulationseinrichtung zu befestigen, wobei weiterhin ein beweglicher Dummy an dem Schlitten oder/und dem Fahrzeug oder Fahrzeugteil angeordnet wird. Anschließend wird mindestens ein Realversuch mit den in dem Vorversuch oder den Vorversuchen vorgenommenen Einstellungen der für den Beschleunigungsverlauf des Schlittens maßgeblichen Komponenten der Crashsimulationseinrichtung durchgeführt.

Das bekannte Verfahren zum Betrieb einer Crashsimulationseinrichtung für Kraftfahrzeuge hat sich insofern bewährt, als dass das Fahrzeug oder Fahrzeugteil und insbesondere der kostspielige Dummy im Rahmen der Vorversuche zur Einstellung der Crashsimulationseinrichtung geschont werden, zumal bei den Vorversuchen lediglich eine Zusatzmasse zum Einsatz kommt, deren Gewicht dem Gesamtgewicht von Fahrzeug bzw. Fahrzeugteil und dem beweglichen Dummy entspricht. Der Nachteil der bekannten Vorgehensweise besteht jedoch darin, dass der im Rahmen der Vorversuche ermittelte und eingestellte Beschleunigungsverlauf des Schlittens nicht oder nur unzureichend im Rahmen des Realversuchs reproduzierbar ist. Es werden vielmehr vereinzelte Abweichungen des im Realversuch erfassten Beschleunigungsverlaufes gegenüber dem Sollbeschleunigungsverlauf festgestellt, die eine realitätsnahe Simulation des realen Crashverhaltens eines Kraftfahrzeugs unterbinden. Mit anderen Worten weist die auf die zuvor beschriebene Weise eingestellte Crashsimulationseinrichtung eine relativ geringe Wiederholgenauigkeit auf, so dass die Anzahl der Realversuche aufgrund einer erhöhten Anzahl an Fehlversuchen steigt, was letztlich zu erhöhten Kosten führt. Die genannten Kosten sind dabei insbesondere auf die Beschädigung der kostenintensiven, meist mit einer aufwendigen Sensorik versehenen Dummys zurückzuführen, die aufgrund der Vielzahl von Realversuchen häufiger ausgetauscht bzw. ersetzt werden müssen.

Es ist daher eine Aufgabe der vorliegenden Erfindung, ein Verfahren zum Betrieb einer Crashsimulationseinrichtung für Kraftfahrzeuge anzugeben, das einerseits im Rahmen der Vorversuche materialschonend durchführbar ist und andererseits im Rahmen der Realversuche eine hohe Wiederholgenauigkeit aufweist, um kostenintensive Fehlversuche zu vermeiden und die Anzahl der Realversuche zu reduzieren. Darüber hinaus liegt der vorliegenden Erfindung die Aufgabe zugrunde, eine Zusatzvorrichtung für eine Crashsimulationseinrichtung zu schaffen, die in den Vorversuchen des erfindungsgemäßen Verfahrens verwendet werden kann und zu den vorgenannten Vorteilen führt. Des Weiteren liegt der vorliegenden Erfindung die Aufgabe zugrunde, eine Crashsimulationseinrichtung mit einer derartigen vorteilhaften Zusatzvorrichtung zu schaffen.

Diese Aufgabe wird durch die in den Patentansprüchen 1, 10 bzw. 15 angegebenen Merkmale gelöst. Vorteilhafte Ausführungsformen der Erfindung sind Gegenstand der Unteransprüche.

Das erfindungsgemäße Verfahren dient dem Betrieb einer Crashsimulationseinrichtung für Kraftfahrzeuge, genauer gesagt der Einstellung und dem Betrieb einer Crashsimulationseinrichtung, und weist die nachstehend näher beschriebenen Verfahrensschritte auf. Zunächst wird eine Crashsimulationseinrichtung bereitgestellt, die einen beschleunigbaren Schlitten aufweist. In diesem Zusammenhang sei beispielsweise auf die aus dem Stand der Technik bekannten Crashsimulationseinrichtungen verwiesen, die in der Regel einen entlang einer Führungsschiene beschleunigbaren Schlitten aufweisen, der durch eine entsprechende Beschleunigungs- oder Antriebsvorrichtung entlang der Führungsschiene beschleunigt werden kann. Der Schlitten ist dabei vorzugsweise derart ausgebildet, dass Fahrzeugteile und Dummys einfach daran angeordnet oder befestigt werden können. Im weiteren Verlauf des erfindungsgemäßen Verfahrens wird eine erste Zusatzmasse an dem Schlitten befestigt, um anschließend einen Vorversuch mit der Crashsimulationseinrichtung durchzuführen. Im Gegensatz zu den aus dem Stand der Technik bekannten Verfahren zum Betrieb einer Crashsimulationseinrichtung wird jedoch ferner mindestens eine bewegliche zweite Zusatzmasse an den Schlitten angeordnet, bevor der Vorversuch oder die Vorversuche durchgeführt werden. Unter einer beweglichen zweiten Zusatzmasse ist hierbei eine Zusatzmasse zu verstehen, die im Gegensatz zu der ersten Zusatzmasse relativ zu dem Schlitten beweglich an dem Schlitten angeordnet ist.

Im Rahmen des Vorversuchs wird der Beschleunigungsverlauf des Schlittens erfasst, um den erfassten Beschleunigungsverlauf anschließend oder zeitgleich mit einem Sollbeschleunigungsverlauf des Schlittens zu vergleichen, wobei der vorgegebene Sollbeschleunigungsverlauf im Wesentlichen den Beschleunigungsverlauf während eines realen Zusammenpralls eines Kraftfahrzeugs mit einem Hindernis widerspiegelt. Hierbei ist es bevorzugt, wenn der Sollbeschleunigungsverlauf des Schlittens derart definiert ist, dass dieser in einem Korridor zwischen einem vorgegebenen oberen Grenzbeschleunigungsverlauf und einem vorgegebenen unteren Grenzbeschleunigungsverlauf angeordnet ist. Sollte der Vergleich des erfassten Beschleunigungsverlaufes von dem Sollbeschleunigungsverlauf abweichen, indem beispielsweise der erfasste Beschleunigungsverlauf zum Teil oberhalb des oberen Grenzbeschleunigungsverlaufes oder zum Teil unterhalb des unteren Grenzbeschleunigungsverlaufes angeordnet ist, so werden zunächst die Einstellungen der für den Beschleunigungsverlauf des Schlittens maßgeblichen Komponenten der Crashsimulationseinrichtung verändert. So kann beispielsweise der durch die Beschleunigungsvorrichtung bzw. Antriebsvorrichtung ausgeübte Impuls auf den Schlitten geändert werden. Alternativ oder ergänzend ist es jedoch ebenso denkbar, die Einstellung einer anderen für den Beschleunigungsverlauf des Schlittens maßgeblichen Komponente der Crashsimulationseinrichtung zu verändern, wie beispielsweise die Einstellung einer gegebenenfalls vorhandenen Bremseinrichtung des Schlittens, die den Beschleunigungsverlauf desselben zu beeinflussen vermag.

Nachdem die Einstellungen der für den Beschleunigungsverlauf des Schlittens maßgeblichen Komponenten der Crashsimulationseinrichtung geändert wurden, wird ein weiterer Vorversuch durchgeführt, wobei auch in diesem Fall der Beschleunigungsverlauf des Schlittens erfasst und mit dem Sollbeschleunigungsverlauf desselben verglichen wird. Diese Vorversuche werden solange durchgeführt, bis durch entsprechende Einstellung der für den Beschleunigungsverlauf des Schlittens maßgeblichen Komponenten der Crashsimulationseinrichtung ein Beschleunigungsverlauf des Schlittens erzielt wird, der dem Sollbeschleunigungsverlauf entspricht, also beispielsweise innerhalb des zuvor erwähnten Korridors zwischen dem oberen Grenzbeschleunigungsverlauf und dem unteren Grenzbeschleunigungsverlauf angeordnet ist.

Entspricht der erfasste Beschleunigungsverlauf dem vorgegebenen Sollbeschleunigungsverlauf, so wurden im Rahmen der Vorversuche die geeigneten Einstellungen der für den Beschleunigungsverlauf des Schlittens maßgeblichen Komponenten der Crashsimulationseinrichtung gefunden, die nach Beenden der Vorversuche beibehalten werden können, um einen entsprechenden Beschleunigungsverlauf des Schlittens auch im Rahmen des nachstehend beschriebenen Realversuchs zu reproduzieren. Vor diesem Realversuch wird jedoch zunächst die erste Zusatzmasse und vorzugsweise auch die zweite Zusatzmasse von dem Schlitten entfernt, um anschließend ein Fahrzeug oder Fahrzeugteil an dem Schlitten zu befestigen und mindestens ein bewegliches Dummy an dem Schlitten oder/und dem Fahrzeug oder Fahrzeugteil anzuordnen. Anschließend wird der zuvor erwähnte Realversuch, bei dem das Fahrzeug oder Fahrzeugteil an dem Schlitten befestigt und der bewegliche Dummy an dem Schlitten oder/und dem Fahrzeug oder Fahrzeugteil angeordnet ist, durchgeführt, wobei die in dem Vorversuch oder den Vorversuchen vorgenommenen Einstellungen der für den Beschleunigungsverlauf des Schlittens maßgeblichen Komponenten der Crashsimulationseinrichtung verwendet werden.

Dank der zusätzlichen Anordnung einer beweglichen zweiten Zusatzmasse an dem Schlitten während des Vorversuchs bzw. der Vorversuche können die Einstellungen der für den Beschleunigungsverlauf des Schlittens maßgeblichen Komponenten der Crashsimulationseinrichtung in einer Weise optimiert werden, die die Wiederholgenauigkeit im Rahmen der Realversuche deutlich erhöht, so dass die Zahl der Fehlversuche bei der Realversuchsdurchführung drastisch reduziert werden kann. Auf diese Weise ist der Materialverbrauch im Hinblick auf das verwendete Fahrzeug bzw. Fahrzeugteil und das kostenintensive bewegliche Dummy nicht nur im Rahmen der Vorversuche, sondern auch im Rahmen der Realversuche deutlich reduziert. Dies hat zur Folge, dass die Gesamtkosten des Verfahrens zum Betrieb der Crashsimulationseinrichtung für Kraftfahrzeuge stark reduziert werden können.

In einer bevorzugten Ausführungsform des erfindungsgemäßen Verfahrens wird die zweite Zusatzmasse, die im Rahmen der Vorversuche beweglich an dem Schlitten oder/und der Zusatzmasse angeordnet war, vor der Durchführung des Realversuchs von dem Schlitten entfernt, um die bereits zuvor erwähnte Wiederholgenauigkeit bei den Realversuchen nicht negativ zu beeinflussen.

Grundsätzlich kann die zweite Zusatzmasse unmittelbar an dem Schlitten der Crashsimulationseinrichtung angeordnet werden. Es ist jedoch ebenso möglich, die zweite Zusatzmasse mittelbar an dem Schlitten anzuordnen, indem diese an der ersten Zusatzmasse angeordnet wird oder ist, wie dies in einer weiteren bevorzugten Ausführungsform des erfindungsgemäßen Verfahrens der Fall ist. So könnte die zweite Zusatzmasse beispielsweise zunächst an der ersten Zusatzmasse beweglich angeordnet werden, bevor die erste Zusatzmasse unbeweglich an dem Schlitten der Crashsimulationseinrichtung befestigt wird.

In einer vorteilhaften Ausführungsform des erfindungsgemäßen Verfahrens, die auf der vorangehend beschriebenen Ausführungsform basiert, wird die zweite Zusatzmasse, die an der ersten Zusatzmasse angeordnet wird oder ist, anschließend zusammen mit der ersten Zusatzmasse an den Schlitten angeordnet oder/und mit dieser von dem Schlitten entfernt. Auf diese Weise muss lediglich die erste Zusatzmasse an dem Schlitten befestigt oder von dem Schlitten entfernt werden, wodurch gleichzeitig auch die zweite an dem Schlitten angeordnete Zusatzmasse an dem Schlitten angeordnet oder von dem Schlitten entfernt wird, so dass der Versuchsaufbau für die Vorversuche relativ schnell erzeugt werden kann.

Um bereits im Rahmen des Vorversuchs einen Versuchsaufbau zu erzielen, der geeignet ist, auch im Realversuch eine hohe Wiederholgenauigkeit des Beschleunigungsverlaufes des Schlittens zu erzielen, wird die zweite Zusatzmasse in einer besonders bevorzugten Ausführungsform des erfindungsgemäßen Verfahrens derart an dem Schlitten oder der ersten Zusatzmasse angeordnet, dass die zweite Zusatzmasse zunächst entlang einer ersten Wegstrecke frei beweglich und anschließend unter federnder oder/und dämpfender, vorzugsweise federnder, Abstützung an dem Schlitten oder der ersten Zusatzmasse entlang einer zweiten Wegstrecke beweglich ist. Mit dieser Versuchsanordnung im Rahmen des Vorversuchs wird somit im Wesentlichen auch der Bewegungsablauf eines Fahrzeuginsassen simuliert, der sich aufgrund eines Zusammenstoßes zunächst frei entlang einer ersten Wegstrecke bewegt und im Anschluss daran unter federnder oder/und dämpfender Abstützung an einem Airbag oder/und einem Sicherheitsgurt entlang einer zweite Wegstrecke bewegt. Wird also eine derartige Anordnung einer zweiten Zusatzmasse bereits im Rahmen der Vorversuche gewählt, so kann insbesondere eine hohe Wiederholgenauigkeit bei den Realversuchen erzielt werden, bei denen ein Dummy mittels eines Airbags oder/und eines Sicherheitsgurtes an dem Fahrzeug oder Fahrzeugteil abgestützt wird. Aber auch die Wiederholgenauigkeit der Realversuche, bei denen andere Dummys, wie beispielsweise frei bewegliche Ladegutdummys, verwendet werden, kann durch die Verwendung des beschriebenen Versuchsaufbaus erhöht werden.

In einer besonders vorteilhaften Ausführungsform des erfindungsgemäßen Verfahrens, die auf der vorangehend beschriebenen Ausführungsform basiert, wird die zweite Zusatzmasse ferner derart an dem Schlitten oder der ersten Zusatzmasse angeordnet, dass die zweite Zusatzmasse im Anschluss an die zweite Wegstrecke dämpfend an dem Schlitten oder der ersten Zusatzmasse abgestützt ist. Auch hierdurch vollzieht die zweite Zusatzmasse einen Bewegungsablauf der zum einen im Wesentlichen dem Bewegungsablauf eines im Realversuch verwendeten Dummys entspricht und zum anderen durch Massenkopplung einen entsprechenden Einfluss auf den Beschleunigungsverlauf des Schlittens hat. Somit kann der Beschleunigungsverlauf des Schlittens bereits im Vorversuch derart genau an den Beschleunigungsverlauf bei einem realen Zusammenprall eines Kraftfahrzeugs mit einem Hindernis angenähert werden, dass die mit der Crashsimulationseinrichtung durchgeführten Realversuche mit dem beweglichen Dummy am Schlitten besonders genau wiederholt werden können, wobei die hohe Wiederholgenauigkeit den Materialeinsatz und die damit verbundenen Kosten zu senken vermag.

Gemäß einer weiteren vorteilhaften Ausführungsform des erfindungsgemäßen Verfahrens wird vor dem Vorversuch eine Zusatzvorrichtung an dem Schlitten oder der ersten Zusatzmasse befestigt bzw. diese Zusatzvorrichtung ist bereits an dem Schlitten oder der ersten Zusatzmasse befestigt. Diese Zusatzvorrichtung weist die zuvor erwähnte zweite Zusatzmasse, eine Führungseinrichtung zur Führung der zweiten Zusatzmasse relativ zu der Zusatzvorrichtung und eine Feder- oder/und Dämpfungseinrichtung auf, wobei die Zusatzvorrichtung nach der Durchführung der Vorversuche oder vor dem Durchführen des Realversuchs gänzlich oder teilweise von dem Schlitten entfernt wird. Hieraus geht hervor, dass die Zusatzvorrichtung grundsätzlich zum Teil von Bestandteilen an dem Schlitten gebildet sein kann. Es ist jedoch bevorzugt, wenn die Zusatzvorrichtung gänzlich von dem Schlitten entfernt bzw. an diesem befestigt wird. Auf diese Weise können die Bestandteile der Zusatzvorrichtung während der Durchführung der Realversuche geschont werden, so dass deren Lebensdauer erhöht ist. Bei einer Zusatzvorrichtung, die die zweite Zusatzmasse, die Führungseinrichtung und die Feder- oder/und Dämpfungseinrichtung aufweist und als eine Einheit an dem Schlitten befestigt oder von diesem entfernt wird, ist es von Vorteil, dass der Vorversuchsaufbau sowie der Realversuchsaufbau besonders schnell erzeugt werden kann, zumal nur wenige Schnittstellen zwischen dem Schlitten und der Zusatzvorrichtung zu berücksichtigen sind.

Um eine besonders hohe Wiederholgenauigkeit bei den Realversuchen zu erzielen, wird in einer weiteren bevorzugten Ausführungsform des erfindungsgemäßen Verfahrens eine zweite Zusatzmasse mit einem Gewicht verwendet, wobei das Gewicht der zweiten Zusatzmasse dem Gewicht des im Realversuch verwendeten Dummys im Wesentlichen entspricht. Diese Ausführungsform umfasst sowohl die Verwendung einer zweiten Zusatzmasse und eines Dummys, deren Gewichte aufeinander abgestimmt sind, als auch die Verwendung einer zweiten Zusatzmasse und mehrerer Dummys, wobei das Gewicht der zweiten Zusatzmasse dann im Wesentlichen dem Gesamtgewicht der Dummys entspricht. Darüber hinaus umfasst diese Ausführungsform die Verwendung mehrerer zweiter Zusatzmassen, von denen jede einzelne zweite Zusatzmasse im Wesentlichen das Gewicht eines der im Realversuch verwendeten Dummys aufweist. Alternativ oder vorzugsweise ergänzend wird ferner eine erste Zusatzmasse mit einem Gewicht verwendet, wobei das Gewicht der ersten Zusatzmasse dem Gewicht des im Realversuch verwendeten Fahrzeugs oder Fahrzeugteils im Wesentlichen entspricht, wodurch die Wiederholgenauigkeit bei den Realversuchen weiter erhöht werden kann.

Wie bereits zuvor erwähnt, resultieren der hohe Materialeinsatz und die hohen Kosten im Rahmen der Realversuche im Wesentlichen daraus, dass kostspielige, aufwendige und störanfällige Dummys verwendet werden. Da die Zahl der Fehlversuche und somit die Zahl der Realversuche durch das erfindungsgemäße Verfahren reduziert werden kann, werden in einer weiteren besonders bevorzugten Ausführungsform des erfindungsgemäßen Verfahrens im Realversuch Dummys verwendet, denen eine Sensorik zum Erfassen der Kräfte, Beschleunigungen oder/und Gewichten zugeordnet ist, die auf die Dummys wirken. Dabei kann die genannte Sensorik teilweise oder gänzlich in den Dummy aufgenommen sein. Dank der niedrigen Anzahl der Realversuche, die durch das erfindungsgemäße Verfahren erreicht wird, können derartige kostenintensive Dummys eingesetzt werden. Bei dieser Ausführungsform ist es bevorzugt, wenn es sich bei dem Dummy um ein Personendummy handelt, dass besonders bevorzugt auf die zuvor beschriebene Weise, nämlich mit einem Sicherheitsgurt oder/und einem Airbag, an dem Fahrzeug oder Fahrzeugteil abstützbar ist. Darüber hinaus ist es bevorzugt, wenn der zweiten Zusatzmasse, die in den Vorversuchen verwendet wird, keine Sensorik zugeordnet ist, um die Kosten im Rahmen der Vorversuche gering zu halten.

Die erfindungsgemäße Zusatzvorrichtung für einen beschleunigbaren Schlitten einer Crashsimulationseinrichtung kann in dem Vorversuch oder den Vorversuchen des erfindungsgemäßen Verfahrens verwendet werden. Dabei umfasst die Zusatzvorrichtung, die an einem Schlitten einer Crashsimulationseinrichtung befestigbar ist, mindestens eine entlang einer Führungseinrichtung bewegliche Zusatzmasse. So kann es sich bei der Führungseinrichtung beispielsweise um Führungsschienen handeln, an denen die bewegliche Zusatzmasse geführt ist. Auch können an der beweglichen Zusatzmasse beispielsweise entsprechende Rollen vorgesehen sein, über die die bewegliche Zusatzmasse an den Führungsschienen oder einem anderen feststehenden Teil der Zusatzvorrichtung abgestützt ist.

In einer bevorzugten Ausführungsform der erfindungsgemäßen Zusatzvorrichtung ist die Zusatzmasse entlang einer ersten Wegstrecke frei beweglich von der Führungseinrichtung geführt.

In einer besonders bevorzugten Ausführungsform der erfindungsgemäßen Zusatzvorrichtung weist die Zusatzvorrichtung einen Stützabschnitt, der unmittelbar oder mittelbar an dem Schlitten der Crashsimulationseinrichtung befestigt werden kann, und eine zwischen dem Stützabschnitt und der Zusatzmasse wirkende Feder- oder/und Dämpfungseinrichtung, vorzugsweise Federeinrichtung, auf, so dass die Zusatzmasse im Anschluss an die erste Wegstrecke unter federnder oder/und dämpfender, vorzugsweise federnder, Abstützung derselben an dem Stützabschnitt entlang einer zweiten Wegstrecke von der Führungseinrichtung geführt ist. Wie bereits zuvor unter Bezugnahme auf das erfindungsgemäße Verfahren erläutert, wird hierdurch eine Zusatzvorrichtung geschaffen, deren Zusatzmasse den Bewegungsablauf bzw. den Beschleunigungsablauf eines im Realversuch beweglich an dem Schlitten angeordneten Dummy besonders exakt simuliert, so dass die Zusatzvorrichtung, die während der Vorversuche des Verfahrens verwendbar ist, eine besonders hohe Wiederholgenauigkeit im Rahmen der Realversuche des Verfahrens bewirkt.

Gemäß einer besonders vorteilhaften Ausführungsform der erfindungsgemäßen Zusatzvorrichtung ist ferner eine Dämpfungseinrichtung vorgesehen, die derart zwischen dem Stützabschnitt und der Zusatzmasse wirkt, dass die Zusatzmasse im Anschluss an die zweite Wegstrecke dämpfend an dem Stützabschnitt abgestützt ist. Bezüglich der Vorteile einer Zusatzvorrichtung mit einer solchen Dämpfungseinrichtung sei auf die Vorteile des zuvor beschriebenen, erfindungsgemäßen Verfahrens verwiesen, bei dem die zweite Zusatzmasse im Anschluss an die zweite Wegstrecke dämpfend an dem Schlitten oder der ersten Zusatzmasse abgestützt ist.

Um das Gewicht der Zusatzmasse der Zusatzvorrichtung besonders schnell und einfach an das Gewicht des im Realversuch verwendeten Dummys anpassen zu können, ist die Zusatzmasse in einer weiteren besonders vorteilhaften Ausführungsform der erfindungsgemäßen Zusatzvorrichtung austauschbar an der Zusatzvorrichtung angeordnet bzw. geführt.

Die erfindungsgemäße Crashsimulationseinrichtung für ein Kraftfahrzeug weist einen beschleunigbaren Schlitten auf, wobei an dem Schlitten die erfindungsgemäße Zusatzvorrichtung befestigt ist.

In einer bevorzugten Ausführungsform der erfindungsgemäßen Crashsimulationseinrichtung ist die Zusatzvorrichtung gänzlich oder teilweise abnehmbar an dem Schlitten befestigt. Hierbei ist es jedoch bevorzugt, wenn die Zusatzvorrichtung gänzlich von dem Schlitten abnehmbar ist, um die Bestandteile der Zusatzvorrichtung während der Realversuche im Rahmen des zuvor beschriebenen Verfahrens vor Beschädigungen zu schützen.

Die Erfindung wird im Folgenden anhand von beispielhaften Ausführungsformen unter Bezugnahme auf die beigefügten Zeichnungen näher erläutert. Es zeigen:
- Fig. 1: ein Ablaufdiagramm zur Veranschaulichung einer Ausführungsform des erfindungsgemäßen Verfahrens zum Betrieb einer Crashsimulationseinrichtung für Kraftfahrzeuge,
- Fig. 2: eine schematische Darstellung einer Crashsimulationseinrichtung in der Seitenansicht,
- Fig. 3: die Crashsimulationseinrichtung von Fig. 2 mit einer an dem Schlitten befestigten ersten Zusatzmasse und einer an dem Schlitten beweglich angeordneten zweiten Zusatzmasse,
- Fig. 4: die Crashsimulationseinrichtung von Fig. 3 in einer ersten Phase des Vorversuchs,
- Fig. 5: die Crashsimulationseinrichtung von Fig. 4 in einer zweiten Phase des Vorversuchs,
- Fig. 6: die Crashsimulationseinrichtung von Fig. 5 in einer dritten Phase des Vorversuchs,
- Fig. 7: die Crashsimulationseinrichtung von Fig. 6 in einer vierten Phase des Vorversuchs und
- Fig. 8: die Crashsimulationseinrichtung aus den Fig. 2 bis 7 nach den Vorversuchen und vor der Durchführung der Realversuche.

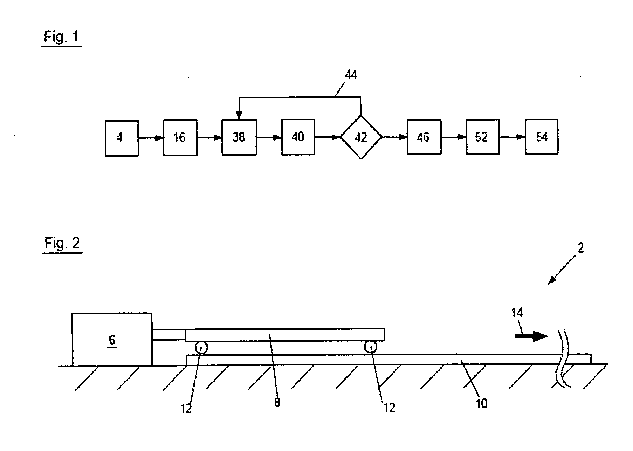

Fig. 1 zeigt ein Ablaufdiagramm zur Veranschaulichung einer Ausführungsform des erfindungsgemäßen Verfahrens zum Betrieb einer Crashsimulationseinrichtung 2 für Kraftfahrzeuge. So wird in einem ersten Verfahrensschritt 4 des Verfahrens eine Crashsimulationseinrichtung 2 bereitgestellt, die in Fig. 2 schematisch dargestellt ist.

So weist die Crashsimulationseinrichtung 2 eine Beschleunigungs- bzw. Antriebsvorrichtung 6 auf. Darüber hinaus umfasst die Crashsimulationseinrichtung 2 einen Schlitten 8, der entlang einer Führungseinrichtung, die im vorliegenden Beispiel von Führungsschienen 10 gebildet ist, geführt, wobei sich der Schlitten 8 in der dargestellten Ausführungsform über Rollen 12 an den Führungsschienen 10 abstützt. So kann der Schlitten 8 der Crashsimulationseinrichtung 2 mit Hilfe der Beschleunigungsvorrichtung 6 in Richtung 14 entlang der Führungsschienen 10 beschleunigt werden, wobei bei der Richtung 14 auch von der Schussrichtung des Schlittens 8 gesprochen werden kann. Als Beschleunigungsvorrichtung 6 kommt hierbei jedweder Antrieb in Frage, der den Schlitten 8 auf eine Weise zu beschleunigen vermag, die einen Beschleunigungsverlauf des Schlittens 8 hervorruft, der dem Beschleunigungsverlauf bei einem realen Zusammenprall eines Kraftfahrzeugs mit einem Hindernis im Wesentlichen entspricht.

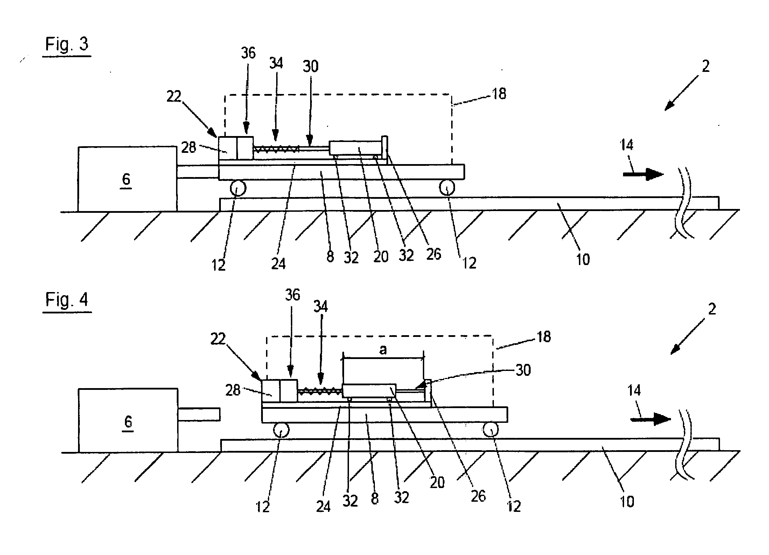

In einem nachfolgenden Verfahrensschritt 16 werden eine erste Zusatzmasse 18 und eine bewegliche zweite Zusatzmasse 20 an dem Schlitten 8 der Crashsimulationseinrichtung 2 angeordnet. Die erste Zusatzmasse 18, die aus Übersichtlichkeitsgründen in Fig. 3 lediglich gestrichelt angedeutet ist, wird dabei derart an dem Schlitten 8 befestigt, dass diese fest mit dem Schlitten 8 verbunden und somit nicht relativ zu dem Schlitten 8 bewegt werden kann. Die erste Zusatzmasse 18 hat dabei ein Gewicht, das dem Gewicht des im später beschriebenen Realversuch verwendeten Fahrzeugs oder Fahrzeugteils im Wesentlichen entspricht. Es sei angemerkt, dass die erste Zusatzmasse auch mehrteilig ausgebildet sein kann.

Die zweite Zusatzmasse 20 ist als Teil einer Zusatzvorrichtung 22 für den beschleunigbaren Schlitten 8 der Crashsimulationseinrichtung 2 ausgebildet. Die Zusatzmasse 20 weist dabei ein Gewicht auf, das dem Gewicht des im später näher beschriebenen Realversuch verwendeten Dummys im Wesentlichen entspricht. Diese Zusatzvorrichtung 22 (Fig. 3) weist zunächst eine Grundplatte 24 auf, mittels derer die Zusatzvorrichtung 22 abnehmbar bzw. lösbar an dem Schlitten 8 befestigt wird. Die Grundplatte 24 ist somit unbeweglich an dem Schlitten 8 befestigt. Alternativ könnte die Zusatzvorrichtung 22 über die Grundplatte 24 auch unbeweglich an der ersten Zusatzmasse 18 befestigt werden.

An der Grundplatte 24 ist ferner in der Richtung 14 ein erster Stützabschnitt 26 und ein in der entgegengesetzten Richtung an der Grundplatte 24 angeordneter zweiter Stützabschnitt 28 vorgesehen, wobei der zweite Stützabschnitt 28 in der entgegengesetzten Richtung von dem ersten Stützabschnitt 26 beabstandet ist. Zwischen dem ersten und zweiten Stützabschnitt 26, 28 erstreckt sich eine Führungseinrichtung 30, entlang derer die zuvor erwähnte zweite Zusatzmasse 20 geführt und bewegbar ist. Zu diesem Zweck ist die zweite Zusatzmasse 20 zum einen an der Führungseinrichtung 30 geführt und zum anderen über Rollen 32 an der Oberseite der Grundplatte 24 abgestützt. Somit ist die zweite Zusatzmasse 20 im Gegensatz zu der ersten Zusatzmasse 18 relativ zu dem Schlitten 8 beweglich an dem Schlitten 8 angeordnet.

Zwischen dem zweiten Stützabschnitt 28 und der zweiten Zusatzmasse 20 ist ferner eine Feder- oder/und Dämpfungseinrichtung 34 vorgesehen, die in der dargestellten Ausführungsform als Federeinrichtung ausgebildet ist. Darüber hinaus ist zwischen dem zweiten Stützabschnitt 28 und der zweiten Zusatzmasse 20 ferner eine Dämpfungseinrichtung 36 vorgesehen, wobei die Funktionsweise der Feder- oder/und Dämpfungseinrichtung 34 und der Dämpfungseinrichtung 36 nachstehend eingehender beschrieben wird.

Anschließend wird in dem Verfahrensschritt 38 (Fig. 1) ein Vorversuch mit der Crashsimulationseinrichtung 2 und dem unter Bezugnahme auf Fig. 3 beschriebenen Aufbau durchgeführt, bei dem der Schlitten 8 durch die Beschleunigungsvorrichtung 6 in Richtung 14 beschleunigt bzw. geschossen wird, wobei die einzelnen Phasen des Vorversuchs in den Fig. 4 bis 7 dargestellt sind.

In der in Fig. 4 gezeigten ersten Phase des Vorversuchs wird der Schlitten 8 durch die Beschleunigungsvorrichtung 6 in Richtung 14 geschossen, wodurch sich die zweite Zusatzmasse 20 bedingt durch deren Trägheit zunächst frei entlang einer ersten Wegstrecke a relativ zu dem Schlitten 8 bewegt. Entlang der ersten Wegstrecke a wirken allenfalls Reibungskräfte zwischen der zweiten Zusatzmasse 20 und der Führungseinrichtung 30 und zwischen den Rollen 32 und der Grundplatte 24, so dass hier von einer freien Beweglichkeit gesprochen werden kann.

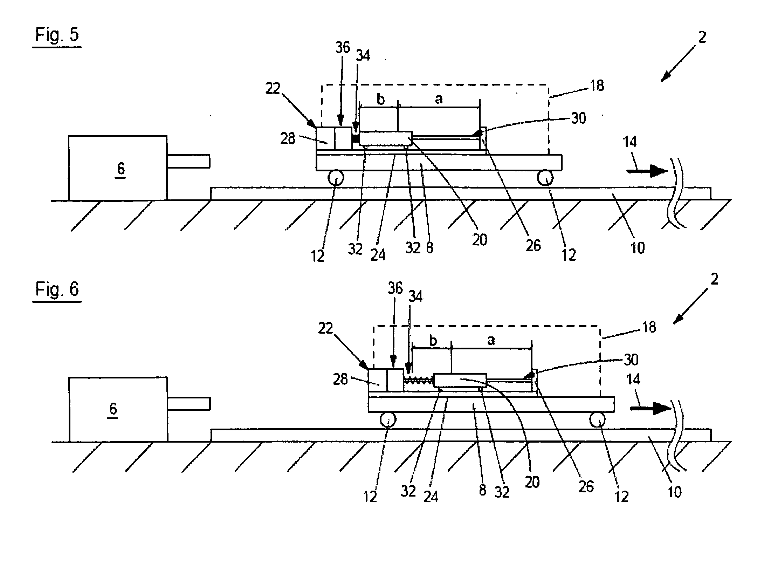

In der zweiten Phase des Vorversuchs bewegt sich die zweite Zusatzmasse 20 im Anschluss an die erste Wegstrecke a entlang einer zweiten Wegstrecke b, wie dies in Fig. 5 angedeutet ist. Während ihrer weiterhin durch Trägheit bedingten Bewegung entlang der zweiten Wegstrecke b wird die zweite Zusatzmasse 20 federnd oder/und dämpfend über die Feder- oder/und Dämpfungseinrichtung 34 und den zweiten Stützabschnitt 28 an dem Schlitten 8 abgestützt. Somit wird in der dargestellten Ausführungsform die Federeinrichtung 34 durch die sich bewegende zweite Zusatzmasse 20 elastisch zusammengedrückt. Im Anschluss an die zweite Wegstrecke b wird die zweite Zusatzmasse 20 dämpfend über die Dämpfungseinrichtung 36 an dem zweiten Stützabschnitt 28 und somit an dem Schlitten 8 abgestützt, so dass die zweite Zusatzmasse 20 zunächst gedämpft und anschließend relativ zu dem Schlitten 8 zum Stillstand gebracht wird.

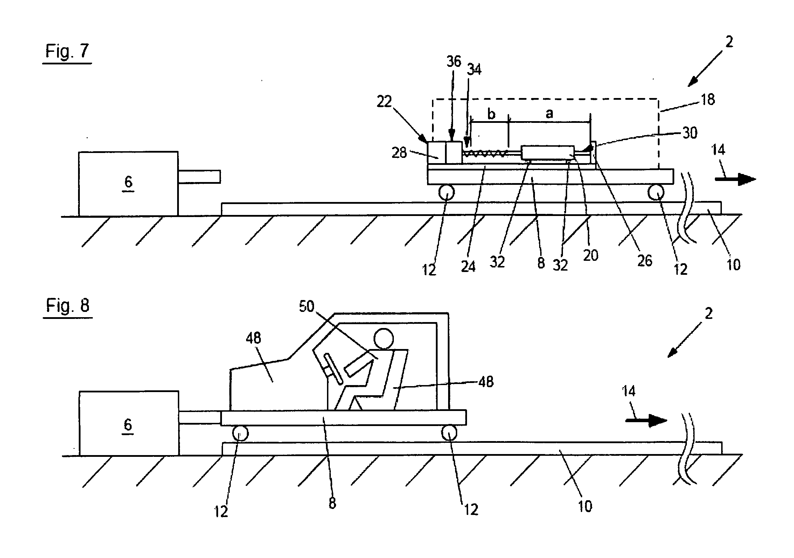

In einer darauf folgenden Phase des Vorversuchs, die in Fig. 6 gezeigt ist, bewirkt die in der vorangehenden Phase zusammengedrückte Federeinrichtung 34, dass die Zusatzmasse 20 wieder relativ zu dem Schlitten 8 in Richtung 14 beschleunigt wird bis sich in einer nachfolgenden Phase des Vorversuchs, die in Fig. 7 gezeigt ist, die zweite Zusatzmasse 20 wieder von der Federeinrichtung 34 löst. In der in Fig. 7 gezeigten Phase bewegt sich die zweite Zusatzmasse 20 wiederum frei entlang der ersten Wegstrecke a, diesmal jedoch in Richtung 14 relativ zu dem Schlitten 8. Um dabei ein zu starkes Anschlagen der zweiten Zusatzmasse 20 an dem ersten Stützabschnitt 26 zu vermeiden, sind vorzugsweise Bremseinrichtungen vorgesehen, die die Bewegung der zweiten Zusatzmasse 20 in Richtung 14 relativ zu dem Schlitten 8 verlangsamen bzw. gänzlich stoppen.

Während des Vorversuchs wird im Verfahrensschritt 40 (Fig. 1) der Beschleunigungsverlauf des Schlittens 8 mit Hilfe geeigneter Messinstrumente ermittelt. Anschließend oder zeitgleich wird der erfasste Beschleunigungsverlauf mit einem Sollbeschleunigungsverlauf des Schlittens 8 verglichen. Dies geschieht vorzugsweise dadurch, dass ein oberer Grenzbeschleunigungsverlauf und ein unterer Grenzbeschleunigungsverlauf vorgegeben wird, zwischen denen ein Korridor ausgebildet ist, innerhalb dessen der Sollbeschleunigungsverlauf liegen soll. Weicht der erfasste Beschleunigungsverlauf von dem Sollbeschleunigungsverlauf ab, indem dieser beispielsweise zum Teil oberhalb des oberen Grenzbeschleunigungsverlaufs oder zum Teil unterhalb des unteren Grenzbeschleunigungsverlaufs angeordnet ist, so wird dies in Verfahrensschritt 42 festgestellt, und es muss ein erneuter Vorversuch durchgeführt werden, wie dies anhand des Pfeils 44 in Fig. 1 angedeutet ist.

Vor dem erneuten Vorversuch werden jedoch zunächst die Einstellungen der für den Beschleunigungsverlauf des Schlittens 8 maßgeblichen Komponenten der Crashsimulationseinrichtung 2 geändert, um im zweiten Vorversuch einen geänderten Beschleunigungsverlauf zu erzielen, der dem Sollbeschleunigungsverlauf eher entspricht. Somit werden solange Vorversuche durchgeführt, bis die Einstellungen der für den Beschleunigungsverlauf des Schlittens 8 maßgeblichen Komponenten der Crashsimulationseinrichtung 2 derart sind, dass der erfasste Beschleunigungsverlauf dem gewünschten Sollbeschleunigungsverlauf des Schlittens 8 entspricht.

Ist dies der Fall, so wird im Verfahrensschritt 46 die erste Zusatzmasse 18 sowie die Zusatzvorrichtung 22 mitsamt der zweiten Zusatzmasse 20 von dem Schlitten 8 entfernt, wie dies beispielsweise der Fig. 2 zu entnehmen ist. Anschließend wird ein Fahrzeug oder Fahrzeugteil 48 an dem Schlitten 8 befestigt, so dass dieses unbeweglich mit dem Schlitten 8 verbunden ist. Darüber hinaus wird ein beweglicher Dummy 50 an dem Schlitten 8 bzw. dem Fahrzeug oder Fahrzeugteil 48 angeordnet. Bei dem beweglichen Dummy 50 handelt es sich vorzugsweise um ein Personendummy, dem eine Sensorik zum Erfassen der Kräfte, Beschleunigungen oder/und Geschwindigkeit zugeordnet ist, die auf den Dummy wirken. Dabei kann die entsprechende Sensorik vorzugsweise zum Teil in den Dummy 50 integriert sein. Somit weist das Dummy 50 im Gegensatz zu der im Vorversuch verwendeten zweiten Zusatzmasse 20 eine Sensorik auf.

Die Erzeugung dieses Realversuchaufbaus, der in Fig. 8 gezeigt ist, erfolgt im Verfahrensschritt 52, wobei anschließend im Verfahrensschritt 54 ein Realversuch mit den in dem Vorversuch oder den Vorversuchen vorgenommenen Einstellungen der für den Beschleunigungsverlauf maßgeblichen Komponenten der Crashsimulationseinrichtung 2 durchgeführt wird, bei dem der Schlitten 8 in entsprechender Weise durch die Beschleunigungsvorrichtung 6 in Richtung 14 geschossen bzw. beschleunigt wird.

Es hat sich gezeigt, dass die Wiederholgenauigkeit bei den Realversuchen deutlich größer ist und Fehlversuche vermieden werden können, wenn die zuvor erwähnte bewegliche zweite Zusatzmasse 20 bzw. die Zusatzvorrichtung 22 mit der zweiten Zusatzmasse 20 in den Vorversuchen verwendet wird, zumal hierdurch das Beschleunigungsverhalten des Realversuchaufbaus bereits in den Vorversuchen besonders genau abgebildet werden kann. Eine derart exakte Abbildung des Realversuchs bereits im Rahmen der Vorversuche kann dann besonders sicher erzielt werden, wenn der im Realversuch verwendete Dummy 50 mittels eines Sicherheitsgurtes oder/und eines Airbags an dem Fahrzeug oder Fahrzeugteil 48 bzw. dem Schlitten 8 abstützbar ist (nicht dargestellt).

Um die zuvor beschriebene Zusatzvorrichtung 22 besonders flexibel einsetzen zu können, ist die zweite Zusatzmasse 20 austauschbar an der Zusatzvorrichtung 22 angeordnet. Auf diese Weise kann für den Vorversuch jeweils eine Zusatzmasse verwendet werden, die im Wesentlichen das Gewicht des im späteren Realversuch verwendeten Dummys 50 aufweist. Darüber hinaus sei angemerkt, dass die zuvor erwähnte Zusatzvorrichtung 22 auch nur teilweise abnehmbar an dem Schlitten 8 angeordnet sein kann. Es ist jedoch bevorzugt, wenn die Zusatzvorrichtung 22 gänzlich von dem Schlitten 8 abnehmbar ausgebildet ist, um die einzelnen Komponenten der Zusatzvorrichtung 22 während der Realversuche vor Beschädigungen zu schützen.

### Bezugszeichenliste

- 2: Crashsimulationseinrichtung
- 4: Verfahrensschritt
- 6: Beschleunigungsverlauf
- 8: Schlitten
- 10: Führungsschienen
- 12: Rollen
- 14: Richtung
- 16: Verfahrensschritt
- 18: erste Zusatzmasse
- 20: zweite Zusatzmasse
- 22: Zusatzvorrichtung
- 24: Grundplatte
- 26: erster Stützabschnitt
- 28: zweiter Stützabschnitt
- 30: Führungseinrichtung
- 32: Rollen
- 34: Feder- oder/und Dämpfungseinrichtung
- 36: Dämpfungseinrichtung
- 38: Verfahrensschritt
- 40: Verfahrensschritt
- 42: Verfahrensschritt
- 44: Pfeil
- 46: Verfahrensschritt
- 48: Fahrzeug oder Fahrzeugteil
- 50: Dummy
- 52: Verfahrensschritt
- 54: Verfahrensschritt

- a: erste Wegstrecke
- b: zweite Wegstrecke

## Patentansprüche

1. Verfahren zum Betrieb einer Crashsimulationseinrichtung (2) für Kraftfahrzeuge mit den Verfahrensschritten
Bereitstellen einer Crashsimulationseinrichtung (2) mit einem beschleunigbaren Schlitten (8), Befestigen einer ersten Zusatzmasse (18) an dem Schlitten (8), Durchführen eines Vorversuchs unter Erfassung des Beschleunigungsverlaufes des Schlittens (8),
Vergleich des erfassten Beschleunigungsverlaufes mit einem Sollbeschleunigungsverlauf des Schlittens (8),
Durchführen eines weiteren Vorversuchs mit veränderter Einstellung der für den Beschleunigungsverlauf des Schlittens (8) maßgeblichen Komponenten der Crashsimulationseinrichtung (2), wenn der erfasste Beschleunigungsverlauf von dem Sollbeschleunigungsverlauf abweicht,
Entfernen der ersten Zusatzmasse (18) von dem Schlitten (8), wenn der erfasste Beschleunigungsverlauf dem Sollbeschleunigungsverlauf entspricht, Befestigen eines Fahrzeugs oder Fahrzeugteils (48) an dem Schlitten (8), Anordnen mindestens eines beweglichen Dummys (50) an dem Schlitten (8) oder/und dem Fahrzeug oder Fahrzeugteil (48) und
Durchführen mindestens eines Realversuchs mit den in dem Vorversuch oder den Vorversuchen vorgenommenen Einstellungen der für den Beschleunigungsverlauf des Schlittens (8) maßgeblichen Komponenten der Crashsimulationseinrichtung (2),
**gekennzeichnet durch** Anordnen mindestens einer beweglichen zweiten Zusatzmasse (20) an dem Schlitten (8) vor dem Durchführen des Vorversuchs oder der Vorversuche.

2. Verfahren nach Anspruch 1, **dadurch gekennzeichnet, dass** die zweite Zusatzmasse (20) vor dem Durchführen des Realversuchs von dem Schlitten (8) entfernt wird.

3. Verfahren nach einem der Ansprüche 1 oder 2, **dadurch gekennzeichnet, dass** die zweite Zusatzmasse (20) mittelbar an dem Schlitten (8) angeordnet wird, indem die zweite Zusatzmasse (20) an der ersten Zusatzmasse (18) angeordnet wird oder ist.

4. Verfahren nach Anspruch 3, **dadurch gekennzeichnet, dass** die zweite Zusatzmasse (20) zusammen mit der ersten Zusatzmasse (18) an dem Schlitten (8) angeordnet oder/und mit dieser von dem Schlitten (8) entfernt wird.

5. Verfahren nach einem der vorangehenden Ansprüche, **dadurch gekennzeichnet, dass** die zweite Zusatzmasse (20) derart an dem Schlitten (8) oder der ersten Zusatzmasse (18) angeordnet wird, dass die zweite Zusatzmasse (20) zunächst entlang einer ersten Wegstrecke (a) frei beweglich und anschließend unter federnder oder/und dämpfender, vorzugsweise federnder, Abstützung an dem Schlitten (8) oder der ersten Zusatzmasse (18) entlang einer zweiten Wegstrecke (b) beweglich ist.

6. Verfahren nach Anspruch 5, **dadurch gekennzeichnet, dass** die zweite Zusatzmasse (20) derart an dem Schlitten (8) oder der ersten Zusatzmasse (18) angeordnet wird, dass die zweite Zusatzmasse (20) im Anschluss an die zweite Wegstrecke (b) dämpfend an dem Schlitten (8) oder der ersten Zusatzmasse (18) abgestützt ist.

7. Verfahren nach einem der vorangehenden Ansprüche, **dadurch gekennzeichnet, dass** vor dem Vorversuch eine Zusatzvorrichtung (22) an dem Schlitten (8) oder der ersten Zusatzmasse (18) befestigt wird oder ist, die die zweite Zusatzmasse (20), eine Führungseinrichtung (30) zur Führung der zweiten Zusatzmasse (20) und eine Feder- oder/und Dämpfungseinrichtung (34) aufweist, wobei die Zusatzvorrichtung (22) vor dem Durchführen des Realversuchs gänzlich oder teilweise von dem Schlitten (8) entfernt wird.

8. Verfahren nach einem der vorangehenden Ansprüche, **dadurch gekennzeichnet, dass** eine zweite Zusatzmasse (20) mit einem Gewicht verwendet wird, das dem Gewicht des Dummys (50) im Realversuch im Wesentlichen entspricht, oder/und eine erste Zusatzmasse (18) mit einem Gewicht verwendet wird, das dem Gewicht des Fahrzeugs oder Fahrzeugteils (48) im Realversuch im Wesentlichen entspricht.

9. Verfahren nach einem der vorangehenden Ansprüche, **dadurch gekennzeichnet, dass** im Realversuch ein Dummy (50) verwendet wird, dem eine Sensorik zum Erfassen der Kräfte, Beschleunigungen oder/und Geschwindigkeiten zugeordnet ist, die auf den Dummy (50) wirken, wobei es sich bei dem Dummy (50) vorzugsweise um ein Personendummy handelt und der zweiten Zusatzmasse (20) besonders bevorzugt keine Sensorik zugeordnet ist.

10. Zusatzvorrichtung (22) für einen beschleunigbaren Schlitten (8) einer Crashsimulationseinrichtung (2), die in den Vorversuchen des Verfahrens nach einem der Ansprüche 1 bis 9 verwendbar ist, **dadurch gekennzeichnet, dass** die an einem Schlitten (8) einer Crashsimulationseinrichtung (2) befestigbare Zusatzvorrichtung (22) mindestens eine entlang einer Führungseinrichtung (30) bewegliche Zusatzmasse (20) aufweist.

11. Zusatzvorrichtung (22) nach Anspruch 10, **dadurch gekennzeichnet, dass** die Zusatzmasse (20) entlang einer ersten Wegstrecke (a) frei beweglich von der Führungseinrichtung (30) geführt ist.

12. Zusatzvorrichtung (22) nach Anspruch 11, **dadurch gekennzeichnet, dass** ein Stützabschnitt (28), der unmittelbar oder mittelbar an dem Schlitten (8) der Crashsimulationseinrichtung (2) befestigbar ist, und eine zwischen dem Stützabschnitt (28) und der Zusatzmasse (20) wirkende Feder- oder/und Dämpfungseinrichtung (34), vorzugsweise Federeinrichtung (34), vorgesehen ist, so dass die Zusatzmasse (20) im Anschluss an die erste Wegstrecke (a) unter federnder oder/und dämpfender, vorzugsweise federnder, Abstützung derselben an dem Stützabschnitt (28) entlang einer zweiten Wegstrecke (b) von der Führungseinrichtung (30) geführt ist.

13. Zusatzvorrichtung (22) nach Anspruch 12, **dadurch gekennzeichnet, dass** eine Dämpfungseinrichtung (36) vorgesehen ist, die derart zwischen dem Stützabschnitt (28) und der Zusatzmasse (20) wirkt, dass die Zusatzmasse (20) im Anschluss an die zweite Wegstrecke (b) dämpfend an dem Stützabschnitt (28) abgestützt ist.

14. Zusatzvorrichtung (22) nach einem der Ansprüche 10 bis 13, **dadurch gekennzeichnet, dass** die Zusatzmasse (20) austauschbar an der Zusatzvorrichtung (22) angeordnet ist.

15. Crashsimulationseinrichtung (2) für ein Kraftfahrzeug mit einem beschleunigbaren Schlitten (8), **dadurch gekennzeichnet, dass** an dem Schlitten (8) eine Zusatzvorrichtung (22) nach einem der Ansprüche 10 bis 14 befestigt ist, wobei die Zusatzvorrichtung (22) vorzugsweise gänzlich oder teilweise von dem Schlitten (8) abnehmbar ist.

## Claims

1. A method for operating a crash simulation device (2) for motor vehicles, comprising the method steps of
providing a crash simulation device (2) with an accelerable slide (8), fastening a first additional mass (18) to the accelerable slide (8), carrying out a preliminary test by detecting the acceleration curve of the slide (8),
comparing the detected acceleration curve with a desired acceleration curve of the slide (8),
carrying out a further preliminary test with a changed setting of the components of the crash simulation device (2) which are relevant for an acceleration curve of the slide (8), if the detected acceleration curve deviates from the desired acceleration curve,
removing the first additional mass (18) from the slide (8) if the detected acceleration curve corresponds to the desired acceleration curve, fastening a vehicle or a part (48) of a vehicle to the slide (8), arranging at least one moveable dummy (50) on the slide (8) and/or the vehicle or vehicle part (48), and
carrying out at least one real test with the settings of the components of the crash simulation device (2) which are relevant for the acceleration curve of the slide (8), said settings being made in the preliminary test or tests, **characterized by** the arrangement of at least one moveable second additional mass (20) on the slide (8) before carrying out the preliminary test or tests.

2. The method according to claim 1, **characterized in that** the second additional mass (20) is removed from the slide (8) before the carrying out the real test.

3. The method according to one of the claims 1 or 2, **characterized in that** the second additional mass (20) is arranged indirectly on the slide (8), **in that** the second additional mass (20) is arranged on the first additional mass (18).

4. The method according to claim 3, **characterized in that** the second additional mass (20) is arranged on the slide (8) together with the first additional mass (18), or/and is removed from the slide (8) together with said first mass (18).

5. The method according to one of the preceding claims, **characterized in that** the second additional mass (20) is arranged on the slide (8) or the first additional mass (18) in such a manner that the second additional mass (20) is initially freely moveable along a first path (a) and subsequently moveable along a second path (b) subject to resilient or/and damping, preferably resilient, support on the slide (8) or the first additional mass (18).

6. The method according to claim 5, **characterized in that** the second additional mass (20) is arranged on the slide (8) or the first additional mass (18) in such a manner that the second additional mass (20), after the second path (b), is supported on the slide (8) or the first additional mass (18) in a damping manner.

7. The method according to one of the preceding claims, **characterized in that** prior to the preliminary test an additional apparatus (22) is or will be fixed to the slide (8) or the first additional mass (18), which comprises the second additional mass (20), a guide device (30) for guiding the second additional mass (20) and a spring or/and damping device (34), with the additional apparatus (22) being removed entirely or partly from the slide (8) before carrying out the real test.

8. The method according to one of the preceding claims, **characterized in that** a second additional mass (20) is used with a weight substantially corresponding to the weight of the dummy (50) in the real test, or/and a first additional mass (18) is used with a weight which substantially corresponds to the weight of the vehicle or vehicle part (48) in the real test.

9. The method according to one of the preceding claims, **characterized in that** a dummy (50) is used in the real test, which is assigned a sensor system that is configured to detect the forces, accelerations or/and speeds acting on the dummy (50), wherein the dummy (50) is preferably a person dummy and the second additional mass (20) is not assigned any sensor system in an especially preferred manner.

10. An additional apparatus (22) for an accelerable slide (8) of a crash simulation device (2), which can be used in preliminary tests of the method according to one of the claims 1 to 9, **characterized in that** the additional apparatus (22) which can be fixed to a slide (8) of a crash simulation device (2) comprises at least one additional mass (20) which is movable along a guide device (30).

11. The additional apparatus (22) according to claim 10, **characterized in that** the additional mass (20) is guided by the guide device (30) in a freely moveable manner along a first path (a).

12. The additional apparatus (22) according to claim 11, **characterized in that** a support section (28), which can be directly or indirectly fastened to the slide (8) of the crash simulation device (2), and a spring or/and damping device (34), preferably a spring device (34), are provided between the support section (28) and the additional mass (20), so that the additional mass (20) is guided by the guide device (30) after the first path (a) under resilient and/or damping, preferably resilient, support of said additional mass (20) on the support section (28) along a second path (b).

13. The additional apparatus (22) according to claim 12, **characterized in that** a damping device (36) is provided, which acts in such a way between the support section (28) and the additional mass (20) that the additional mass (20) is supported after the second path (b) in a damping manner on the support section (28).

14. The additional apparatus (22) according to one of the claims 10 to 13, **characterized in that** the additional mass (20) is exchangeably arranged on the additional apparatus (22).

15. A crash simulation device (2) for a motor vehicle, comprising an accelerable slide (8), **characterized in that** an additional apparatus (22) according to one of the claims 10 to 14 is fixed to the slide (8), with the additional apparatus (22) preferably being partly or entirely removable from the slide (8).

## Revendications

1. Procédé pour faire fonctionner une installation de simulation de collisions (2) pour des véhicules à moteur, comprenant les étapes de procédé suivantes :
mise à disposition d'une installation de simulation de collisions (2) avec un chariot (8) pouvant être accéléré, fixation d'une première masse supplémentaire (18) sur le chariot (8), réalisation d'un essai préalable avec acquisition de l'évolution de l'accélération du chariot (8),
comparaison de l'évolution de l'accélération acquise à une consigne d'évolution de l'accélération du chariot (8),
réalisation d'un autre essai préalable avec un réglage modifié des composants de l'installation de simulation de collisions (2) déterminants pour l'évolution de l'accélération du chariot (8) si l'évolution de l'accélération acquise s'écarte de la consigne d'évolution de l'accélération,
retrait de la première masse supplémentaire (18) du chariot (8) si l'évolution de l'accélération acquise correspond à la consigne d'évolution de l'accélération, fixation d'un véhicule ou d'une partie de véhicule (48) sur le chariot (8), disposition d'au moins un mannequin (50) mobile sur le chariot (8) et/ou sur le véhicule ou la partie de véhicule (48) et
réalisation d'au moins un essai réel avec les réglages des composants de l'installation de simulation de collisions (2) déterminants pour l'évolution de l'accélération du chariot (8) effectués lors de l'essai préalable ou des essais préalables,
**caractérisé en ce qu'**au moins une deuxième masse supplémentaire (20) est disposée sur le chariot (8) avant la réalisation de l'essai préalable ou des essais préalables.

2. Procédé selon la revendication 1, **caractérisé en ce que** la deuxième masse supplémentaire (20) est enlevée du chariot (8) avant la réalisation de l'essai réel.

3. Procédé selon l'une des revendications 1 ou 2, **caractérisé en ce que** la deuxième masse supplémentaire (20) est disposée indirectement sur le chariot (8) en cela que la deuxième masse supplémentaire (20) est disposée ou présente sur la première masse supplémentaire (18).

4. Procédé selon la revendication 3, **caractérisé en ce que** la deuxième masse supplémentaire (20) est disposée sur le chariot (8) en même temps que la première masse supplémentaire (18) et/ou enlevée du chariot (8) avec celle-ci.

5. Procédé selon l'une des revendications précédentes, **caractérisé en ce que** la deuxième masse supplémentaire (20) est disposée sur le chariot (8) ou sur la première masse supplémentaire (18) de telle manière que la deuxième masse supplémentaire (20) est tout d'abord librement mobile le long d'une première distance de trajet (a) puis mobile le long d'une deuxième distance de trajet (b) en s'appuyant de manière suspendue et/ou amortie, de préférence suspendue, sur le chariot (8) ou sur la première masse supplémentaire (18).

6. Procédé selon la revendication 5, **caractérisé en ce que** la deuxième masse supplémentaire (20) est disposée sur le chariot (8) ou sur la première masse supplémentaire (18) de telle manière que la deuxième masse supplémentaire (20) s'appuie de façon amortie sur le chariot (8) ou sur la première masse supplémentaire (18) après la deuxième distance de trajet (b).

7. Procédé selon l'une des revendications précédentes, **caractérisé en ce qu'**un dispositif supplémentaire (22) est fixé ou se fixe avant l'essai préalable sur le chariot (8) ou la première masse supplémentaire (18), lequel comporte la deuxième masse supplémentaire (20), un dispositif de guidage (30) pour le guidage de la deuxième masse supplémentaire (20) et un dispositif de suspension et/ou d'amortissement (34), ce dispositif supplémentaire (22) étant entièrement ou partiellement enlevé du chariot (8) avant la réalisation de l'essai réel.

8. Procédé selon l'une des revendications précédentes, **caractérisé en ce que** l'on utilise une deuxième masse supplémentaire (20) dont le poids correspond sensiblement au poids du mannequin (50) dans l'essai réel, et/ou on utilise une première masse supplémentaire (18) dont le poids correspond sensiblement au poids du véhicule ou de la partie de véhicule (48) dans l'essai réel.

9. Procédé selon l'une des revendications précédentes, **caractérisé en ce que** l'on utilise dans l'essai réel un mannequin (50) associé à des capteurs pour détecter les forces, les accélérations et/ou les vitesses agissant sur le mannequin (50), le mannequin (50) étant de préférence un mannequin à forme humaine et aucun capteur n'étant en particulier associé à la deuxième masse supplémentaire (20).

10. Dispositif supplémentaire (22) pour un chariot (8) pouvant être accéléré dans une installation de simulation de collisions (2), qui peut être utilisé dans les essais préalables du procédé selon l'une des revendications 1 à 9, **caractérisé en ce que** le dispositif supplémentaire (22) pouvant être fixé à un chariot (8) d'une installation de simulation de collisions (2) présente au moins une masse supplémentaire (20) mobile le long d'un dispositif de guidage (30).

11. Dispositif supplémentaire (22) selon la revendication 10, **caractérisé en ce que** la masse supplémentaire (20) est guidée de façon librement mobile par le dispositif de guidage (30) le long d'une première distance de trajet (a).

12. Dispositif supplémentaire (22) selon la revendication 11, **caractérisé en ce qu'**il est prévu une section de support (28) qui peut être fixée directement ou indirectement sur le chariot (8) de l'installation de simulation de collisions (2) et un dispositif de suspension et/ou d'amortissement (34), de préférence un dispositif de suspension (34) agissant entre la section de support (28) et la masse supplémentaire (20), de sorte que la masse supplémentaire (20) est guidée après la première distance de trajet (a) par le dispositif de guidage (30) en étant soutenue de façon suspendue et/ou amortie, de préférence de façon suspendue, sur la section de support (28) le long d'une deuxième distance de trajet (b).

13. Dispositif supplémentaire (22) selon la revendication 12, **caractérisé en ce qu'**il est prévu un dispositif d'amortissement (36) qui agit entre la section de support (28) et la masse supplémentaire (20) de telle manière que la masse supplémentaire (20) s'appuie de façon amortie sur la section de support (28) après la deuxième distance de trajet (b).

14. Dispositif supplémentaire (22) selon l'une des revendications 10 à 13, **caractérisé en ce que** la masse supplémentaire (20) est disposée sur le dispositif supplémentaire (22) de façon à pouvoir être échangée.

15. Installation de simulation de collisions (2) pour un véhicule à moteur avec un chariot (8) pouvant être accéléré, **caractérisée en ce qu'**est fixé sur le chariot (8) un dispositif supplémentaire (22) selon l'une des revendications 10 à 14, le dispositif supplémentaire (22) pouvant de préférence être entièrement ou partiellement enlevé du chariot (8).
